# EUROPÄISCHE PATENTSCHRIFT

(11) **EP 0 644 405 B1**
(45) Veröffentlichungstag und Bekanntmachung des Hinweises auf die Patenterteilung: **10.06.1998**
(21) Anmeldenummer: 94114882.7
(22) Anmeldetag: 21.09.1994
(51) Int. Cl.: G01G 11/08

(54) **Verfahren und Vorrichtung zum gravimetrischen Dosieren von Schüttgut**
Method and apparatus for gravimetrically dosing of bulk materials
Méthode et dispositif pour le dosage gravimétrique de produits en vrac

(30) Priorität: 21.09.1993 DE 4332062
(43) Veröffentlichungstag der Anmeldung: 22.03.1995
(73) Patentinhaber: Pfister GmbH, 86165 Augsburg (DE)
(72) Erfinder: Häfner, Hans Wilhelm, D-86551 Aichach-Walchshofen (DE); Wolfschaffner, Hubert, D-86453 Dasing (DE); Lerch, Günther, D-86438 Kissing (DE); Bock, Günther, D-86316 Friedberg (DE)
(74) Vertreter: Fiener, Josef

(56) Entgegenhaltungen:
- EP-A- 0 425 735
- EP-A- 0 530 797
- WO-A-92/03707
- DE-A- 4 129 726

## Beschreibung

Die Erfindung betrifft ein Verfahren und eine Vorrichtung zum gravimetrischen Dosieren von Schüttgut gemäß den oberbegrifflichen Merkmalen des Patentanspruches 1 bzw. 8.

Eine derartige gravimetrische Dosiervorrichtung für Schüttgüter und ein Verfahren zum Betrieb einer derartigen Vorrichtung ist aus der EP-A-0 530 797 bekannt, wobei die Masse des jeweils von einem Meßteller über eine zwischen der Beschickungsstation und der Entleerungsstation befindliche Meßstrecke geförderten Gutes bestimmt wird. Der Meßteller weist dabei mindestens drei unabhängig voneinander geringfügig vertikal bewegbare, gleich große Sektoren auf, unter denen je eine Kraftmeßvorrichtung angeordnet ist, welche die Masse des auf jeweils einem Sektor befindlichen Gutes beim Vorbeilauf eines Sektors bestimmen.

Beim Betrieb einer solchen Vorrichtung werden unter laufender Feststellung der Drehwinkelposition des rotierenden Meßtellers die Kraftmeßvorrichtungen immer dann für eine Massebestimmung aktiviert, wenn sich ein Sektor innerhalb der Meßstrecke befindet. Zur Erhöhung der Dosiergenauigkeit wird nach Entleerung eines Sektors die Masse des leeren Sektors bestimmt und von der vor Entleerung des Sektors bestimmten Masse abgezogen. Hierdurch läßt sich eine relativ hohe Dosiergenauigkeit erreichen.

Da jedoch die Taraverwägung jeweils erst nach der Entleerung oder dem Abwurf des Schüttgutes stattfinden kann, ist die Abschaltgenauigkeit beim Dosieren kleiner Gewichtsmengen und bei häufigem Abschalten oft nicht ausreichend, da beim Abschaltpunkt des Meßtellers oder der Meßscheibe die jeweils verbleibende Restgutmenge nicht berücksichtigt ist. Zudem ist für die Taralastmessung ein gewisser Aufwand, insbesondere die Schaffung eines vierten Sektors erforderlich.

Demzufolge liegt der Erfindung die Aufgabe zugrunde, eine Vorrichtung und ein Verfahren zum gravimetrischen Dosieren von Schüttgut zu schaffen, mit dem bei einfacher Herstellung eine verbesserte Abschaltgenauigkeit, insbesondere bei kleinen Dosiermengen erreicht wird.

Diese Aufgabe wird gelöst durch ein Verfahren mit den Merkmalen des Patentanspruches 1, sowie durch eine Vorrichtung gemäß den Merkmalen des Patentanspruches 8.

Durch die kontinuierliche Differenzbildung von aufeinanderfolgenden Gewichtswerten wird die abgeworfene Masse zum jeweiligen Abgabezeitpunkt in Art einer Echtzeit-Messung erfaßt. Da hierbei jeweils die Abstreifvorrichtung und die daran auftretenden Reaktionskräfte beim Abstreif- oder Abwurfvorgang kontinuierlich in die Messung eingehen, können diese das Meßergebnis nicht verfälschen, sondern heben sich gegenseitig auf. Dadurch wird eine besonders hohe Abschaltgenauigkeit beim Dosieren selbst von kleinen Dosiermengen erreicht.

Bei der diesbezüglichen Vorrichtung werden die Reaktionskräfte an dem Abstreifer bzw. dessen Eigengewicht mit einer Kraftmeßeinrichtung erfaßt, so daß die registrierte Kraft bei Messung der Gewichtskraft in der Meßzone mit berücksichtigt wird, womit etwaige verfälschende Kraftreaktionen durch den Austrag- oder Abstreifvorgang eliminiert werden.

Weitere vorteilhafte Ausgestaltungen des Verfahrens und der Vorrichtung sind Gegenstand der abhängigen Ansprüche.

Weitere Merkmale und Vorteile ergeben sich aus der nachfolgenden Beschreibung von Ausführungsbeispielen anhand der Zeichnungen.

Es zeigen:
- Fig. 1: eine schematische Seitenansicht zur Verdeutlichung des grundsätzlichen Aufbaus;
- Fig. 2: eine Draufsicht auf die Vorrichtung nach Fig. 1;
- Fig. 3: ein schematisches Diagramm mit der dabei verwendeten Wäge-Steuerung;
- Fig. 4: eine Draufsicht auf eine abgewandelte Vorrichtung mit nur drei Sektoren;
- Fig. 5: eine Vorrichtung gemäß Fig. 4 in einer zeitlich versetzten Stellung zur Erläuterung des Meßvorganges;
- Fig. 6: eine um etwa 90° verdreht dargestellte Seitenansicht gemäß Fig. 1; wobei eine erfindungsgemäße Austragvorrichtung vorgesehen ist;
- Fig. 7: eine abgewandelte Form der Austragvorrichtung;
- Fig. 8: eine Draufsicht auf eine weitere Ausführungsform der Austragvorrichtung;
- Fig. 9: eine weiterhin abgewandelte Ausführungsform der Vorrichtung mit einer stationären Meßscheibe und einem rotierenden Beschickungsorgan; und
- Fig. 10: eine abgewandelte Ausführung der Austragvorrichtung in der Ausbildung als Austragschnecke.

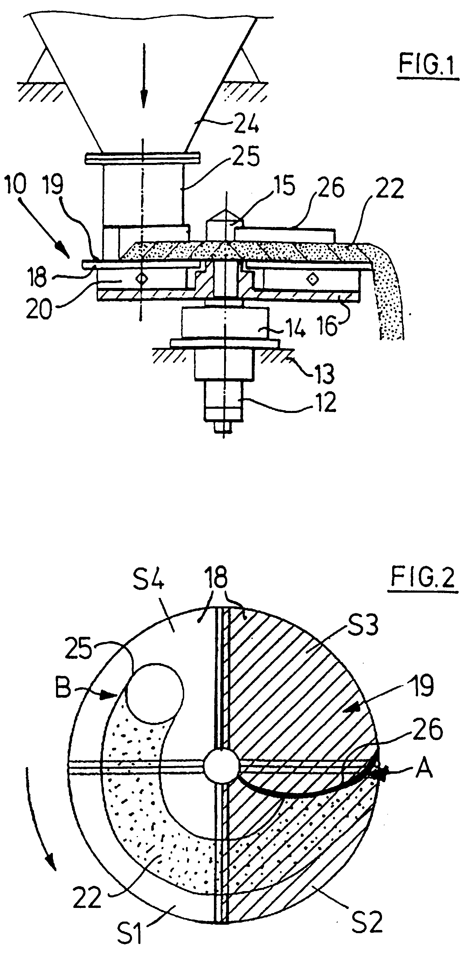

In Fig. 1 ist eine erste Ausführungsform einer erfindungsgemäßen Dosiervorrichtung 10 mit einer Meßscheibe 19 gezeigt, die in vier Sektoren 18 unterteilt ist, wobei jeder Sektor 18 über eine Kraftmeßvorrichtung 20 auf einem Drehteller 16 abgestützt ist. Der Drehteller 16 ist von einem Motor 12 über ein Getriebe 14 und eine Welle 15 mit einstellbarer, bzw. geregelter Drehzahl angetrieben. Die Vorrichtung 10 ruht auf einer Basis 13, die ein Gestell oder ein Rahmen sein kann. Auf der hier linken Seite über der Meßscheibe 19 öffnet sich ein Beschickungsorgan 25 hier in Form eines Schachtes, der von einem ebenfalls ortsfest angeordneten Behälter 24 mit fließfähigem Schüttgut 22 beschickt wird. Hierdurch wird die Beschickungsposition B gebildet.

Dem Beschickungsorgan 25 liegt eine Abgabeposition A mit einer Austragvorrichtung 26 gegenüber, die das auf der Meßscheibe 19 aufgebrachte Schüttgut 22 abstreift, so daß die Meßscheibe 19 geleert ist, bevor sie wiederum unterhalb des Beschickungsorgans 25 gelangt. Die Austragvorrichtung 26 ist vorzugsweise als gerader oder gekrümmter Abstreifer ausgebildet, wie weiter unten beschrieben wird.

In Fig. 2 ist die entsprechende Draufsicht dargestellt, wobei die Meßscheibe 19 beim Ausführungsbeispiel aus vier gleichen Sektoren 18 (S1 bis S4) besteht, die unabhängig voneinander gelagert sind, etwa durch flexibel überbrückte Radialschlitze voneinander getrennt und somit wägetechnisch entkoppelt sind. Jeder Sektor 18 ist auf einer ihnen jeweils zugeordneten Kraftmeßvorrichtung 20 aufgesetzt. Jedoch können die Kraftmeßvorrichtungen 20 auch jeweils an den Trennungsstellen zwischen den Sektoren 18 vorgesehen sein.

In der ersten der hier vier Phasen des Dosiervorganges läuft ein Sektor 18 (hier: S4) unter dem Beschickungsorgan 25 hindurch, so daß er mit Schüttgut 22 beladen wird. Nach einer Drehung der Meßscheibe 19 um etwa 180° wird die Abgabeposition A erreicht und das Schüttgut 22 durch die Austragvorrichtung 26 in Form eines Abstreifers abgeworfen. Dieser Aufbau entspricht somit im wesentlichen der Vorrichtung gemäß der EP-A-0 530 797.

Gegenüber diesem Stand der Technik wird die Masse nicht mehr jeweils vor und nach der Abgabeposition (Abstreifbereich) bestimmt, sondern die Masse direkt am Abwurf der Abgabeposition bestimmt. Die Meßstrecke, die hier schraffiert dargestellt ist, setzt sich in der gezeigten Stellung aus den zwei Sektoren S2 und S3 zusammen, da auf diesen beiden Sektoren S2 und S3 der Abstreifer 26 aufliegt. Die Meßstrecke ist hierbei von der Beschickungsposition B genügend weit entfernt, so daß der Beschickungsvorgang keinen Einfluß auf die Massebestimmung hat. Die Meßstrecke wird im wesentlichen durch die Länge der Austragvorrichtung 26 vorgegeben, da die jeweilige Meßstrecke mindestens die Sektoren 18 umfaßt, die vom Abstreifer 26 bedeckt sind. Hierbei wird das gesamte Gewicht, also sowohl das Eigengewicht der Sektoren 18 und des Abstreifers 26, als auch das Gewicht des innerhalb der Meßstrecke befindlichen Schüttgutes 22 erfaßt, hier beispielsweise durch Addition der Meßwerte der beiden Kraftmeßeinrichtungen 20, die den beiden in der rechten Hälfte befindlichen Sektoren S2 und S3 zugeordnet sind.

Von wesentlicher Bedeutung ist hierbei, daß nach Drehung der Meßscheibe 19 um jeweils einen bestimmten Drehwinkel oder nach einer bestimmten Zeitdauer, z. B. jede Zehntel-Sekunde eine Bestimmung der Masse in der so definierten Meßstrecke erfolgt. Aus der Differenz des ersten Meßwertes und des zeitversetzten, zweiten Meßwertes läßt sich somit die in diesem Zeitintervall (z. B. eine Zehntel-Sekunde) abgegebene oder abgestreifte Masse bestimmen.

Nach Drehung der Meßscheibe 19 um beispielsweise 60° kommt der Abstreifer 26 auf einem neuen Sektor 18, nämlich S1, zu liegen, während der im ersten Quadranten dargestellte Sektor S3 den Abstreifbereich verlassen hat. Zu diesem Zeitpunkt bzw. nach diesem Verdrehwinkel wird die Meßstrecke entsprechend neu geschaltet, indem nun die Gewichtserfassung der Sektoren S1 und S2 erfolgt. Es sei darauf hingewiesen, daß die Umschaltung der Sektoren nicht an einem Drehwinkel von beispielsweise 60° oder 90° gebunden ist, sondern bereits erfolgen kann, wenn der Sektor S3 den Abstreifer vollständig verlassen hat, also beispielsweise nach einer Drehung von nur wenigen Grad gegenüber der hier dargestellten Stellung. Es sei darauf hingewiesen, daß dieser Vorgang der Umschaltung kontinuierlich erfolgt, wobei die hier schraffiert dargestellte Meßstrecke durch Umschaltung der zu messenden Sektoren 18 laufend neu zusammengesetzt wird, nämlich hier beginnend mit S3 - S2, dann S2 - S1, dann S1 - S4 und dann S4 - S3. Die Umschaltung erfolgt dabei durch Positionserfassung der Meßscheibe 19 entweder durch Impulsgabe am Umfang der Meßscheibe 19 oder auf der Welle 15 und/oder gleichzeitiger Drehzahlbestimmung der Meßscheibe 19 oder des Antriebsmotores 12. Der Betrieb kann dabei mit konstanter oder variabler Rotordrehzahl erfolgen.

Die so bestimmte, an der Abgabeposition A abgeworfene Masse kann über Zeit- und Drehzahlbestimmung in einen Dosierstrom (Durchfluß) umgerechnet werden. Ebenso kann die bestimmte abgeworfene Masse aufsummiert oder integriert werden, so daß nach Erreichen einer durch einen Sollwert vorgegebenen Gesamtmasse die Meßscheibe 19 oder das Beschickungsorgan 25 abgeschaltet wird. Durch Regelung der Drehzahl der Meßscheibe 19 oder der Drehzahl bzw. des Durchlaßquerschnittes des Beschickungsorganes 25 kann eine vorbestimmte Momentandosiermenge eingehalten werden.

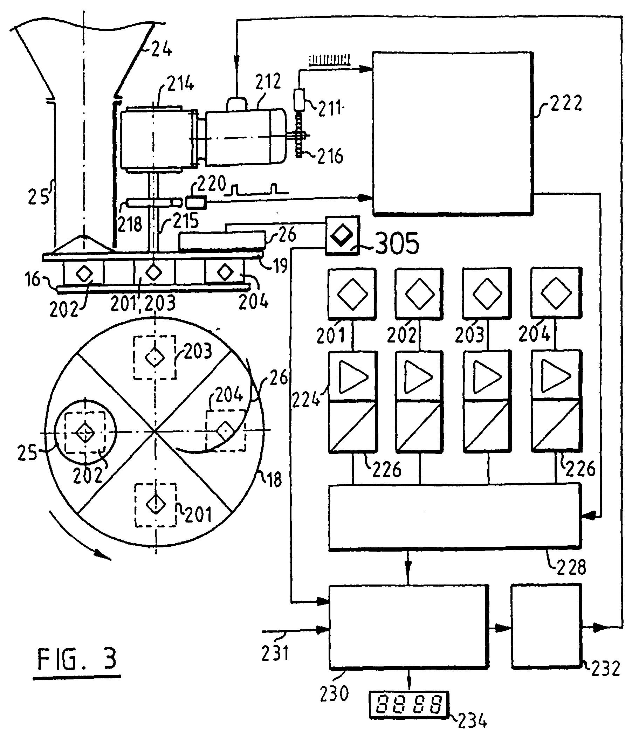

In Fig. 3, linker Bereich, ist der mechanische Aufbau der Dosiervorrichtung ähnlich demjenigen der Figuren 1 und 2 schematisch angedeutet. Die vier Sektoren 18 stützen sich über je eine Kraftmeßvorrichtung 201, 202, 203 und 204 auf dem Drehteller 16 ab. Im rechten Bereich von Fig. 3 ist die elektrische Schaltungsanordnung für die Kraftmeßvorrichtungen 201 bis 204 schematisch dargestellt, deren Ausgänge über Verstärker 224 an Analog-Digital-Wandler 226 angeschlossen sind, deren Ausgänge über die Auswahlschaltung 228 nach Art eines Multiplexers an die eigentliche Auswerteschaltung 230 zur Differenzbildung aufeinanderfolgender Gewichtswerte und damit zur Massenbestimmung des abgeworfenen Schüttgutes verwendet werden.

Die Ermittlung der Umschaltzeitpunkte beispielsweise in der Ausführung gemäß Fig. 2 von der durch die Sektoren S2 und S3 gebildeten Meßstrecke auf die Meßstrecke aus den Sektoren S1 und S2 erfolgt durch eine Zeitgabeschaltung 222, die an die Auswahlschaltung 228 angeschlossen ist. Die jeweilige Winkelposition, aus der sich entnehmen läßt, wann ein Sektor den Abstreifbereich verlassen hat bzw. in diesen eintritt, ist mittels einer auf der Welle 215 befestigten Taktscheibe 218 und einem entsprechenden Drehwinkelsensor 220 feststellbar. Wie oben angedeutet, hängt diese Winkelposition vorwiegend von der Länge und Krümmung des verwendeten Abstreifers 26 ab.

Da die Kraftmeßvorrichtungen 20 bzw. 201 bis 204 mit dem Drehteller 16 rotieren, erfolgt die Signalabnahme in einer dem Fachmann allgemein bekannter Weise induktiv, optoelektronisch oder über eine nicht dargestellte
Schleifring/Bürstenkombination, die an der Welle 215 angeordnet ist. Jedoch können die Kraftmeßvorrichtungen 20 auch stationär angeordnet sein, wie dies in der EP-A-0 530 797 näher beschrieben ist.

In der Auswerteschaltung 230 wird laufend (z. B. durch einen im Zehntel-Sekunden-Bereich getakteten Taktgenerator jeweils nach einer Zehntel-Sekunde) eine Differenzbildung aus zwei zeitlich aufeinanderfolgenden Gewichtswerten, die z. B. in einem Verschiebespeicher (DRAM) gespeichert werden, durchgeführt, so daß die zwischen zwei Messungen abgeworfene Schüttgut-Masse exakt erfaßbar ist, da die Meßbedingungen, wie Auflagegewicht des Abstreifers in diesem kurzen Zeitintervall als konstant angenommen werden können. An der Auswerteschaltung 230 kann bei 231 ein Sollwert für den Materialdurchsatz oder eine abzuwerfende Gesamtmasse angelegt werden, so daß zur Regelung die Drehzahl des Motors 212 über einen Regler 232 entsprechend der Abweichung zwischen Sollwert und Istwert geregelt wird oder bei Erreichen der angestrebten Gesamtmasse die Meßscheibe 19 angehalten wird.

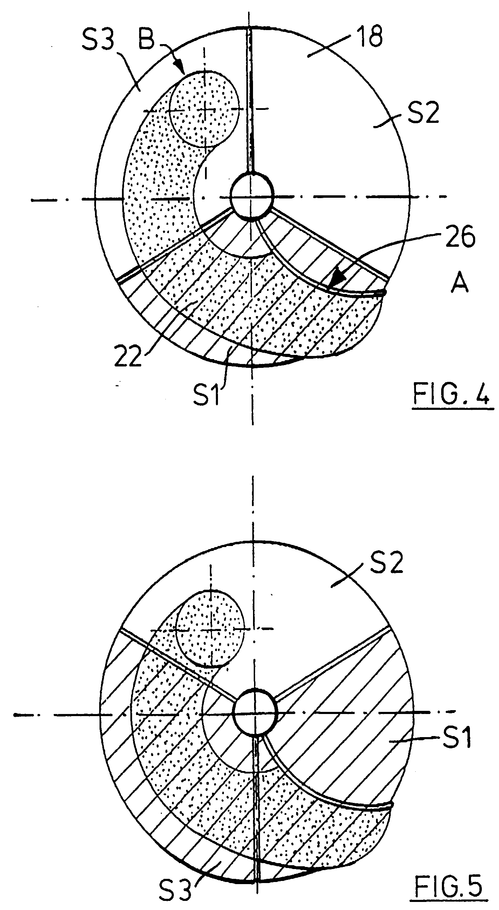

In Fig. 4 und 5 ist der Meßvorgang für eine Vorrichtung mit nur drei Sektoren 18 gezeigt. Befindet sich die Austragvorrichtung 26, hier in Form eines gekrümmten Abstreifers nur auf einem Sektor S1, wird die an der Abgabeposition A abgeworfene Masse des Schüttgutes durch laufende Messung des jeweiligen Sektorgewichtes (hier S1) und Differenzbildung der zeitlich aufeinanderfolgenden Gewichtswerte durchgeführt. Trifft infolge der Weiterdrehung der Meßscheibe 19 der Abstreifer 26 auf den nächsten Sektor S3, wird zu diesem Zeitpunkt der Gewichtswert beider Sektoren S1 und S3 als Grundlage für die laufende Differenzbildung aufeinanderfolgender Gewichtswerte bestimmt. Wenn dann infolge der Weiterdrehung der Sektor S1 den Abstreifer 26 verläßt, genügt es, die Bestimmung der abgeworfenen Masse nurmehr auf den Sektor S3 bezogen, durchzuführen, wie dies durch die Abfolge der Figuren 4 und 5 ohne weiteres ersichtlich ist.

Es sei darauf hingewiesen, daß bei der Stellung gemäß Fig. 4 ebenso wie bei der Stellung gemäß Fig. 5, wobei zwei Sektoren die Meßstrecke bilden, eine kontinuierliche Abfrage der Gewichtssignale der Kraftmeßvorrichtung bzw.
Kraftmeßvorrichtungen erfolgt, so daß eine Auswertung und damit eine Differenzbildung aufeinanderfolgender Gewichtswerte beispielsweise alle zwei Grad, d. h. also pro Umlauf einhundertachzigmal oder etwa jede Zehntelsekunde erfolgt, wenn besonders geringe Dosiermengen abgeworfen werden sollen. Wenn die Taktscheibe 218 zur Steuerung der Zeitgabeschaltung 222 und der Auswahlschaltung 228 entsprechend feiner ausgebildet ist, sind auch Gewichtserfassungen im Winkelminutenbereich möglich.

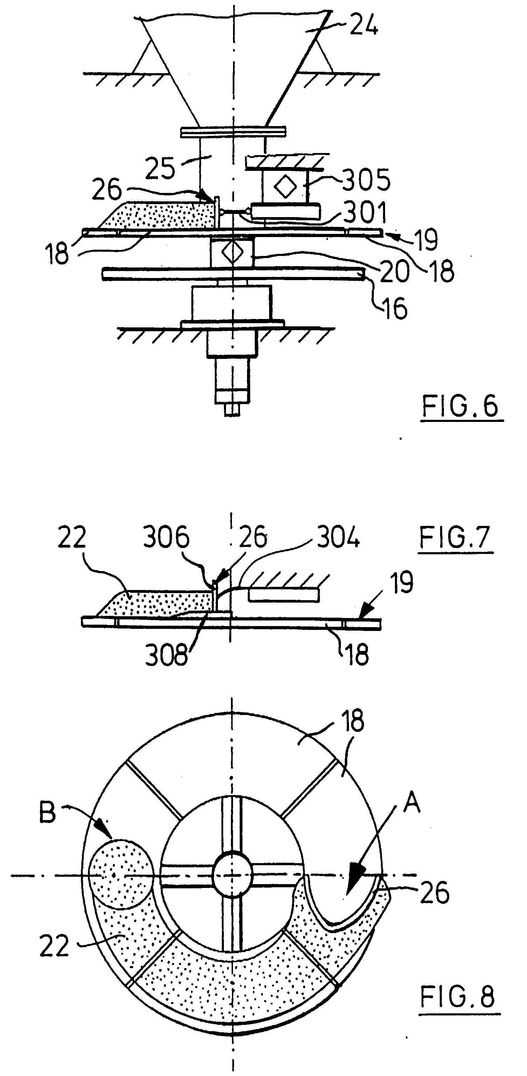

In Fig. 6 ist eine bevorzugte Ausführungsform der Vorrichtung zum gravimetrischen Dosieren für Schüttgüter dargestellt, wobei die Vorrichtung grundsätzlich dem Aufbau gemäß Fig. 1 entspricht. Zusätzlich ist zur verbesserten Meßgenauigkeit noch eine Kraftmeßeinrichtung 305 an der Austragvorrichtung 26 über einen Lenker 301 angekoppelt, um die Reaktionskraft des Abstreifers 26 mitzuregistrieren. Diese gemessene Reaktionskraft wird zu der von den Kraftmeßvorrichtungen 20 erfaßten Gewichtskraft des jeweiligen Sektors bzw. der Sektoren in der Meßstrecke miteingerechnet, womit etwaige verfälschende Kraftreaktionen durch den Abstreifvorgang eliminiert werden können. Die Ankoppelung zwischen der Kraftmeßeinrichtung 305 und der Austragvorrichtung 26 in Form des Abstreifers kann dabei auch anstatt des Lenkers 301 mit einem Doppellenker (Parallellenker) einer Geradführung oder mit Federn an der Basis angelenkt sein. Der Abstreifer 26 liegt dabei auf der Meßscheibe 19 mit seinem Eigengewicht auf, wobei diese Gewichtskraft innerhalb der kurzen Meßintervalle als Konstante anzusehen ist und durch die Differenzbildung der in kurzen Zeitintervallen aufeinanderfolgenden Gewichtswerte nicht verfälschend in das Meßergebnis eingeht.

In Fig. 7 ist eine derartige Aufhängung mittels einer Anpreßfeder 304 dargestellt, wobei zusätzlich die Abstreifleiste 306 als bevorzugte Ausführung der Austragvorrichtung 26 mit einer zur Meßscheibe 19 hin ausgerichteten Andrückschiene 308 versehen ist. Hierdurch wird der Abstreifer 306 durch das Schüttgutgewicht mittels der Andrückschiene 308 zusätzlich auf den jeweiligen Wägesektor 18 gedrückt, womit ein Abheben des Abstreifers 26 verhindert wird. Hiermit wird eine bessere Entleerung der Meßscheibe 19 erreicht. Durch diese Andrückschiene 308 kann zudem der Abstreifer 26 bei gleicher Räumwirkung relativ leicht ausgeführt sein, wodurch Reaktionskräfte auf die Meßscheibe 19 verringert werden. Es sei darauf hingewiesen, daß diese Ausführung ebenfalls mit einer Kraftmeßeinrichtung 305 gemäß Fig. 6 ausgeführt sein kann.

In Fig. 8 ist eine spezielle Ausführung der Austragvorrichtung 26 in Form eines sowohl nach innen als auch nach außen gekrümmten Abstreifers dargestellt. Hierdurch erfolgt eine beidseitige Entleerung sowohl nach außen als auch nach innen hin, so daß Reaktionskräfte am Abstreifer zusätzlich reduziert werden und somit eine Vergleichmäßigung des Abwurfes erreicht wird. Es sei darauf hingewiesen, daß der Abstreifer 26 auch vollständig nach innen hin entleeren kann, wobei an der Meßscheibe 19 in deren Zentrum entsprechende Durchbrüche zur Bildung der Abgabeposition A vorgesehen sind.

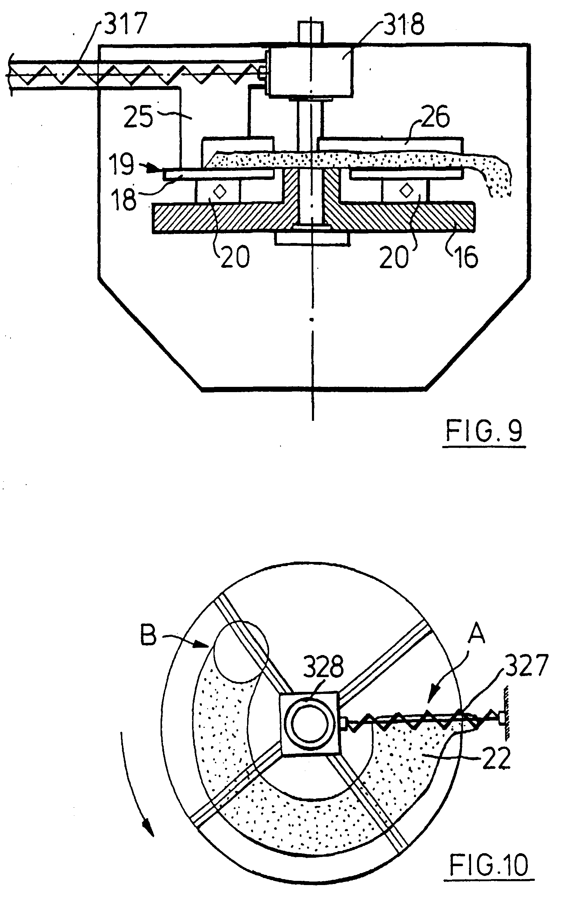

In Fig. 9 ist eine abgewandelte Ausführungsform des Beschickungsorgans 25 dargestellt, wobei zur Materialaufgabe eine oder mehrere Förderschnecken 317 vorgesehen sind, die über ein zentrales Winkelgetriebe 308 von der Welle der Meßscheibe 19 mit angetrieben sein können.

In Fig. 10 ist eine ähnliche Förderschneckenanordnung 327 als Austragvorrichtung 26 vorgesehen, wobei wiederum die Austragschnecke 327 von einem zentralen Winkelgetriebe 328 angetrieben ist. Diese Ausführung des Beschickungsorgans 25 und der Austragsvorrichtung 26 jeweils als Förderschnecken eignen sich insbesondere für weniger rieselfähige oder fließfähige Stoffe. Es sei darauf hingewiesen, daß als Beschickungsorgan 25 ebenso wie als Austragvorrichtung 26 dem Fachman geläufige Dosiergeräte, wie Zellenradschleusen oder Kratzerketten oder rotierende Abstreifer verwendet werden können. Dabei können solche Austragvorrichtungen 26 ebenso wie die Abstreifleiste in Fig. 6 an einer Kraftmeßvorrichtung 305 zur Messung der Reaktionskraft gelagert sein.

Schließlich sei darauf hingewiesen, daß anstatt der umlaufenden Meßscheibe 19 bei stationärer Anordnung sowohl des Beschickungsorgans 25 als auch der Austragvorrichtung 26 in kinematischer Umkehrung die Meßscheibe 19 stationär angeordnet sein kann, während das Beschickungsorgan 25 und die Austragvorrichtung 26 umlaufen. Hierdurch wird der Vorteil erreicht, daß die Kraftmeßvorrichtungen 20 unterhalb der einzelnen Sektoren 18 der Meßscheibe 19 stationär angeordnet werden können, so daß sich eine einfachere Übertragung des Wägesignals ergibt.

## Patentansprüche

1. Verfahren zum gravimetrischen Dosieren von Schüttgut, das an einer Beschickungsposition (B) auf eine Meßscheibe (19) aufgegeben wird und an einer gegenüber dieser (B) versetzten Abgabeposition (A) von einer Austragvorrichtung (26) abgestreift wird, wobei die Meßscheibe (19) in Sektoren (18) aufgeteilt ist, deren jeweiliges Gewicht zusammen mit dem auf dem jeweiligen Sektor (18) befindlichen Schüttgut erfaßt wird und die Austragvorrichtung (26) in der Abgabeposition (A) wenigstens einen Sektor (18) überdeckt,
dadurch gekennzeichnet, daß
die Gewichtserfassung fortlaufend an dem in der Abgabeposition (A) befindlichen Sektor (18) erfolgt und durch Differenzbildung aus diesen aufeinanderfolgenden Gewichtswerten die zwischenzeitlich an der Abgabeposition (A) abgegebene Masse des Schüttgutes bestimmt wird.

2. Verfahren nach Anspruch 1,
dadurch gekennzeichnet, daß
die Umschaltung zwischen aufeinanderfolgenden Sektoren (18) periodisch nach jeweils einem bestimmten Zeitintervall erfolgt.

3. Verfahren nach Anspruch 1,
dadurch gekennzeichnet, daß
die Umschaltung zwischen aufeinanderfolgenden Sektoren (18) nach einem bestimmten Drehwinkel erfolgt.

4. Verfahren nach einem der Ansprüche 1 bis 3,
dadurch gekennzeichnet, daß
die an der Abgabeposition (A) bestimmte, abgegebene Masse in einem Dosierstrom umgerechnet wird.

5. Verfahren nach Anspruch 4,
dadurch gekennzeichnet, daß
der errechnete Momentan-Dosierstrom zur Regelung der Drehzahl der Meßscheibe (19) oder der Drehzahl eines Beschickungsorganes (25) verwendet wird.

6. Verfahren nach einem der Ansprüche 1 bis 3,
dadurch gekennzeichnet, daß
die an der Abgabeposition (A) bestimmte, abgegebene Masse aufsummiert wird und nach Erreichen eines Sollwertes die Meßscheibe (19) und/oder das Beschickungsorgan (25) gestoppt wird.

7. Verfahren nach einem der Ansprüche 1 bis 6,
dadurch gekennzeichnet, daß
zur zusätzlichen Kontrolle der abgegebenen Masse eine Taraverwägung des Sektors (18) in einer Stellung nach der Abgabeposition (A) durchgeführt wird, sowie vor der Abgabeposition (A) ein Brutto-Gewichtswert erfaßt wird und der daraus gebildete Netto-Massewert mit dem Wert für die an der Abgabeposition (A) bestimmte, abgegebene Masse verglichen wird.

8. Vorrichtung zum gravimetrischen Dosieren von Schüttgut mit einer Meßscheibe (19), einem Beschickungsorgan (25), einer gegenüber dem Beschickungsorgan (25) versetzten Austragvorrichtung (26) und wenigstens einer Kraftmeßvorrichtung (20), mit der das Gewicht des jeweils über die Meßscheibe (19) zwischen dem Beschickungsorgan (25) und der Austragvorrichtung (26) geförderten Gutes erfaßt wird, wobei an der Meßscheibe (19) mindestens drei unabhängig voneinander geringfügig vertikal bewegbare, wägetechnisch entkoppelte Sektoren (18) vorgesehen sind, sowie die Kraftmeßvorrichtung (20) unterhalb der Sektoren (18) angeordnet ist und das Gewicht des auf jeweils einem Sektor (18) befindlichen Gutes erfaßt, wobei jedem Sektor (18) eine Kraftmeßvorrichtung (20) zugeordnet ist
dadurch gekennzeichnet, daß
eine Auswerteschaltung (230) vorgesehen ist, in welcher aus den von der Kraftmeßvorrichtung (20), die dem an der Abgabeposition (A) befindlichen Sektor (18) zugeordnet ist, aufeinanderfolgend ermittelten Gewichtswerten durch Differenzbildung die zwischenzeitlich an der Abgabeposition (A) abgegebene Masse des Schüttguts bestimmt wird, und die Austragvorrichtung (26) mit einer Kraftmeßeinrichtung (305) zur Erfassung der an der Austragvorrichtung (26) wirkenden Kräfte gekoppelt ist.

9. Vorrichtung nach Anspruch 8,
dadurch gekennzeichnet, daß
die Austragvorrichtung (26) als Austragsschnecke (327) ausgebildet ist.

10. Vorrichtung nach Anspruch 8,
dadurch gekennzeichnet, daß
die Austragvorrichtung (26) als Abstreifleiste (306) ausgebildet ist.

11. Vorrichtung nach Anspruch 10,
dadurch gekennzeichnet, daß
die Abstreifleiste (306) mit einer zur Meßscheibe (19) hin ausgerichteten Andrückschiene (308) versehen ist.

12. Vorrichtung nach einem der Ansprüche 8 bis 11,
dadurch gekennzeichnet, daß
die Austragvorrichtung (26) eine Abgaberichtung nach außen hin aufweist.

13. Vorrichtung nach einem der Ansprüche 8 bis 11,
dadurch gekennzeichnet, daß
die Austragvorrichtung (26) eine Austragrichtung nach innen hin aufweist, wobei die Meßscheibe (19) ringförmig mit einer zentralen Abgabeposition (A) ausgebildet ist.

14. Vorrichtung nach einem der Ansprüche 8 bis 13,
dadurch gekennzeichnet, daß
die Austragvorrichtung (26) eine beidseitige Austragsrichtung radial nach innen und außen hin aufweist.

## Claims

1. Method of gravimetric metering of bulk material, which is delivered at a charge position (B) to a measuring disk (19) and is scraped off at a discharge position (A) oppositely offset thereto (B) by a discharge device (26), wherein the measuring disk (19) is divided into sectors (18) whose current weight together with that of the bulk material disposed on the current sector (18) is detected and the discharge device (26) in the discharge position (A) covers at least one sector (18),
characterized in that
the weight determination is effected continuously at the sector (18) located at the discharge position (A) and the mass of the bulk material delivered at the discharge position (A) in the meantime is determined by difference formation from these sequential weight determinations.

2. Method according to claim 1, characterized in that the switching between sequential sectors (18) is effected periodically after a respective predetermined interval of time.

3. Method according to claim 1, characterized in that the switching between sequential sectors (18) is effected after a predetermined angle of rotation.

4. Method according to any one of claims 1 to 3, characterized in that the determined mass delivered at the discharge position (A) is converted into a metered flow.

5. Method according to claim 4, characterized in that the computed instantaneous metered flow is employed to regulate the speed of rotation of the measuring disk (19) or the speed of rotation of a charge member (25).

6. Method according to any one of claims 1 to 3, characterized in that the determined mass delivered at the discharge position (A) is accumulated and the measuring disk (19) and/or the charge member (25) is stopped after attaining a set-point value.

7. Method according to any one of claims 1 to 6, characterized in that a tare weighing of the sector (18) in a position after the discharge position (A) is effected in order to give additional control over the delivered mass, and a brutto weight value is determined before the discharge position (A) and the nett mass formed therefrom is compared with the determined value for the mass delivered at the discharge position (A).

8. Apparatus for gravimetric metering of bulk material, with a measuring disk (19), a charge member (25), a discharge device (26) offset opposite the charge member (25) and at least one force measuring device (20) with which the weight of the material currently conveyed on the measuring disk (19) between the charge member (25) and the discharge device (26) is determined, wherein the measuring disk (19) is provided with at least three sectors (18) movable slightly vertically independently of each other and decoupled from each other in weighing technology terms, and the force measuring device (20) is arranged below the sectors (18) and detects the weight of the material located on each sector (18), wherein each sector (18) has a force measuring device (20) associated thereto,
characterized in that
a processing circuit (230) is provided to determine therein the mass of the bulk material, delivered in the meantime at the discharge position (A), by difference formation from the weight values sequentially determined by the force measuring device (20) associated to the sector (18) located at the discharge position (A), and the discharge device (26) is coupled to a force measuring device (305) for detecting the forces acting on the discharge device (26).

9. Apparatus according to claim 8, characterized in that the discharge device (26) is formed as a discharge auger (327).

10. Apparatus according to claim 8, characterized in that the discharge device (26) is formed as a scraper strip (306).

11. Apparatus according to claim 10, characterized in that the scraper strip (306) is provided with a pressure bar (308) facing the measuring disk (18).

12. Apparatus according to any one of claims 8 to 11, characterized in that the discharge device (26) effects delivery outwardly.

13. Apparatus according to any one of claims 8 to 11, characterized in that the discharge device (26) effects delivery inwardly, the measuring disk (19) being annular with a central discharge position (A).

14. Apparatus according to any one of claims 8 to 13, characterized in that the discharge device (26) discharges on both sides, radially inwardly and outwardly.

## Revendications

1. Procédé pour le dosage gravimétrique d'un produit en vrac qui est chargé au niveau d'une position de chargement (B) sur un disque de mesure (19) et qui est raclé au niveau d'une position de distribution (A) décalée par rapport à la précédente (B) par un dispositif d'évacuation (26), sachant que le disque de mesure (19) est divisé en secteurs (18) dont le poids est chaque fois mesuré en même temps que le produit en vrac qui se trouve sur le secteur en question (18), et que le dispositif d'évacuation (26) recouvre au moins un secteur (18) dans la position de distribution (A), caractérisé en ce que la mesure du poids s'effectue en continu au niveau du secteur (18) qui se trouve dans la position de distribution (A), et en ce qu'on détermine la masse de produit en vrac distribuée au niveau de la position de distribution (A) en soustrayant les valeurs de poids successivement mesurées.

2. Procédé selon la revendication 1, caractérisé en ce que le passage aux secteurs successifs (18) s'effectue périodiquement après chaque fois un certain intervalle de temps.

3. Procédé selon la revendication 1, caractérisé en ce que le passage aux secteurs successifs (18) s'effectue après un certain angle de rotation.

4. Procédé selon l'une des revendications 1 à 3, caractérisé en ce que la masse donnée distribuée au niveau de la position de distnbution (A) est convertie dans un flux de dosage.

5. Procédé selon la revendication 4, caracténsé en ce que le flux de dosage instantané calculé est utilisé pour régler la vitesse de rotation du disque de mesure (19) ou la vitesse de rotation d'un organe de chargement (25).

6. Procédé selon l'une des revendications 1 à 3, caractérisé en ce que la masse donnée distribuée au niveau de la position de distribution (A) est additionnée, et en ce que lorsqu'une valeur de consigne est atteinte, le disque de dosage (19) et/ou l'organe de chargement (25) est arrêté.

7. Procédé selon l'une des revendications 1 à 6, caractérisé en ce que, pour procéder à un contrôle supplémentaire de la masse distribuée, on fait la tare du secteur (18) dans une position suivant la position de distribution (A), puis on enregistre avant la position de distribution (A) un poids brut, et enfin on compare la masse nette qui en résulte avec la valeur pour la masse donnée distribuée à la position de distnbution (A).

8. Dispositif pour le dosage gravimétrique d'un produit en vrac, comprenant un disque de mesure (19), un organe de chargement (25), un dispositif d'évacuation (26) décalé par rapport à l'organe de chargement (25) et au moins un dynamomètre (20) qui permet de mesurer le poids du produit transporté par le disque de mesure (19) entre l'organe de chargement (25) et le dispositif d'évacuation (26), sachant qu'au moins trois secteurs (18) pouvant légèrement se déplacer verticalement indépendamment l'un de l'autre et autonomes du point de vue de la technique de pesée sont prévus sur le disque de mesure (19), et que le dynamomètre (20) est disposé sous les secteurs (18) et mesure le poids du produit qui se trouve chaque fois sur l'un des secteurs (18), un dynamomètre (20) étant associé à chaque secteur (18), caractérisé en ce qu'est prévu un circuit d'évaluation (230) dans lequel on détermine la masse de produit en vrac distribuée au niveau de la position de distribution (A) en soustrayant les valeurs de poids successivement établies par le dynamomètre (20) qui est associé au secteur (18) se trouvant dans la position de distribution (A), et en ce que le dispositif d'évacuation (26) est couplé avec un dynamomètre (305) pour mesurer les forces agissant sur le dispositif d'évacuation (26).

9. Dispositif selon la revendication 8, caractérisé en ce que le dispositif d'évacuation (26) est réalisé en tant que vis d'évacuation (327).

10. Dispositif selon la revendication 8, caractérisé en ce que le dispositif d'évacuation (26) est réalisé en tant que racle (306).

11. Dispositif selon la revendication 10, caractérisé en ce que la racle (306) est munie d'un rail presseur (308) pointant vers le disque de mesure (19).

12. Dispositif selon l'une des revendications 8 à 11, caractérisé en ce que le dispositif d'évacuation (26) présente une direction d'évacuation vers l'extérieur.

13. Dispositif selon l'une des revendications 8 à 11, caractérisé en ce que le dispositif d'évacuation (26) présente une direction d'évacuation vers l'intérieur, le disque de mesure (19) étant réalisé de façon annulaire, avec une position de distribution centrale (A).

14. Dispositif selon l'une des revendications 8 à 13, caractérisé en ce que l'évacuation réalisée par le dispositif d'évacuation (26) est bidirectionnelle, à la fois radialement vers l'intérieur et radialement vers l'extérieur.
